# EUROPEAN PATENT APPLICATION

(11) **EP 1 180 866 A1**
(43) Date of publication of application: **20.02.2002**
(21) Application number: 01915703.1
(22) Date of filing: 22.03.2001
(51) Int. Cl.: H04J 11/00, H04J 13/00, H04J 13/02, H04J 13/04, H04J 13/06

(54) **BASE STATION APPARATUS AND RADIO COMMUNICATION METHOD**

(30) Priority: 27.03.2000 JP 2000085915
(71) Applicant: MATSUSHITA ELECTRIC INDUSTRIAL CO., LTD., Kadoma-shi, Osaka 571-8501 (JP)
(72) Inventor: KANEMOTO, Hideki, Yokosuka-shi, Kanagawa 239-0847 (JP); KATO, Osamu, Yokosuka-shi, Kanagawa 237-0066 (JP)
(74) Representative: Grünecker, Kinkeldey, Stockmair & Schwanhäusser Anwaltssozietät
(86) International application number: JP0102286
(87) International publication number: WO0173990

(57) **Abstract**

Spectrum efficiency is improved by assigning only a small number of subcarriers to a paging channel as compared with a traffic channel to which a large number of subcarriers are assigned. Also, by grouping users and assigning the paging channel of each group to a corresponding subcarrier, the received band is reduced and processing involved in reception decreased, and power consumption is reduced, thus saving battery power.

## Description

### Technical Field

The present invention relates to a base station apparatus and radio communication method to be used in a digital radio communication system.

### Background Art

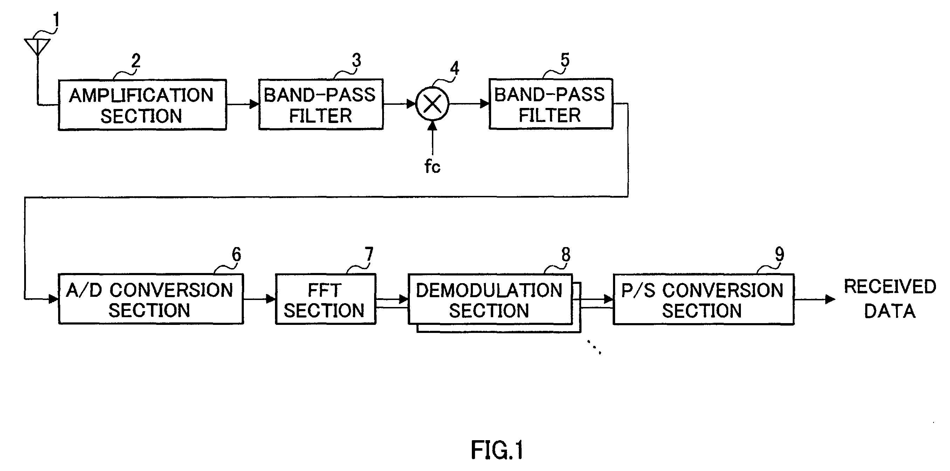

FIG.1 shows a configuration of the receiving side of a conventional multicarrier communication apparatus used in a digital radio communication system. A signal transmitted from a communicating station is received at an antenna 1 and amplified by an amplification section 2. The amplified received signal is filtered by a signal-band band-pass filter 3, and then multiplied by a carrier signal in a multiplication section 4.

A signal that has been multiplied by the carrier signal and converted to a baseband signal is filtered by a band-pass filter (low-pass filter) section 5, and then converted to a digital signal by an A/D conversion section 6. A received signal series that has converted to a digital signal undergoes a discrete Fourier transform in an FFT (fast Fourier transform) section 7, and subcarrier signals are extracted.

Each subcarrier signal is demodulated by a corresponding demodulation section 8, and converted to time-series signal by a parallel/serial conversion section 9. By this means, a received data series is obtained.

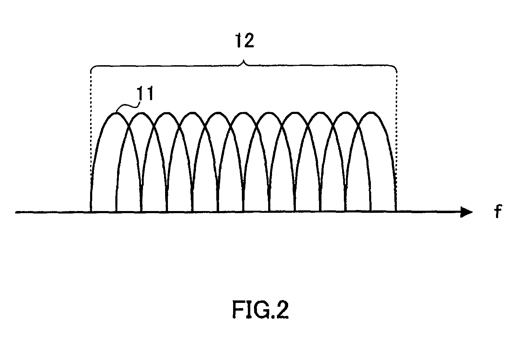

FIG.2 is an illustration showing a subcarrier configuration of the received signal. The subcarriers 11 are arranged at mutually orthogonal frequencies. As it is necessary to arrange subcarriers at mutually orthogonal frequencies in this way, it is necessary for discrete Fourier transform processing to be carried out for the entire signal band 12 by the FFT section 7 in FIG.1.

In a cellular mobile radio communication system, radio communication channels to transmit and receive signal between a base station and mobile station include a traffic channel accommodating traffic data such as voice and image data, and a control channel that performs communicating station or communication status control. When transmitted information increases, as with multimedia information that transmits voice and moving picture data, or the like, a user's traffic channel gradually increases in speed, capacity, and bandwidth.

A technology has been developed whereby the number of subcarriers assigned to a traffic channel is changed dynamically according to user traffic in a multicarrier communication method in order to accommodate a large-volume user traffic data efficiently (Unexamined Japanese Patent Publication No. 11-17644).

Meanwhile, a paging channel, which is a control channel shared by a plurality of mobile stations on downlink, is used to report call reception to a mobile station and to perform short message communication or control.

If a band of a traffic channel that accommodates large-volume traffic data in performing communication is also assigned to a paging channel in the same way, since the amount of information transmitted on a paging channel is small, there is a problem of wasteful communication channel use, which tends to lower spectrum efficiency.

Also, if a wideband paging channel equivalent to wideband user traffic is used, when a mobile station is standing by, it is necessary to receive the same large volume of wideband signals as a traffic channel and demodulate them at high speed, and the processing by the reception circuitry is increased. As a result, power consumption by the reception circuitry is increased, batteries are consumed, and standby time is shortened.

The above description refers to multicarrier communication, but the same kinds of problems also occur in multicode communication. That is to say, if the same kind of spreading code is assigned to a paging channel used for short message communication or control as to a large-volume traffic channel, it will no longer be possible to make efficient use of code resources.

### Disclosure of Invention

It is an object of the present invention to provide a base station apparatus and radio communication method that make it possible to prevent power consumption by reception circuitry of a communication terminal apparatus from increasing, while not reducing spectrum efficiency or while using code resources efficiently.

A subject matter of the present invention is to improve spectrum efficiency in a multicarrier communication system by assigning a smaller number of subcarriers to a paging channel or similar downlink common control channel than the number of subcarriers assigned to a large-volume traffic channel for which a plurality of subcarriers are assigned to a user.

Also, in a multicarrier communication system, as a result of grouping users and assigning a downlink common control channel subcarrier to each of these groups, it is not necessary for a plurality of subcarriers to be received by a communication terminal apparatus, processing involved in reception is reduced, and power consumption is reduced, thus saving battery power.

Moreover, a subject matter of the present invention is to use code resources efficiently in a multicode communication system by assigning a smaller number of spreading codes to a paging channel or similar downlink common control channel than the number of spreading codes assigned to a large-volume traffic channel for which a plurality of spreading codes are assigned to a user.

Also, in a multicode communication system, as a result of grouping users and assigning a downlink common control channel spreading code to each of these groups, it is not necessary for processing to be performed with a plurality of spreading codes by a communication terminal apparatus, processing is reduced, and power consumption is reduced, thus saving battery power.

### Brief Description of Drawings

FIG.1 is a block diagram showing the configuration of the receiving side of a conventional multicarrier communication apparatus;
FIG.2 is an illustration showing subcarrier assignment of a conventional multicarrier communication apparatus;
FIG.3 is a block diagram showing the configuration of a base station apparatus according to Embodiment 1 of the present invention;
FIG.4 is a block diagram showing the configuration of a communication terminal apparatus according to Embodiment 1 of the present invention;
FIG.5 is an illustration showing subcarrier assignment according to the aforementioned Embodiment 1;
FIG.6 is a block diagram showing the configuration of a base station apparatus according to Embodiment 2 of the present invention;
FIG.7 is a block diagram showing the configuration of a communication terminal apparatus according to Embodiment 2 of the present invention;
FIG.8 is an illustration showing subcarrier assignment according to the aforementioned Embodiment 2;
FIG.9 is a block diagram showing the configuration of a base station apparatus according to Embodiment 3 of the present invention; and
FIG.10 is a block diagram showing the configuration of a communication terminal apparatus according to Embodiment 3 of the present invention.

### Best Mode for Carrying out the Invention

With reference now to the accompanying drawings, embodiments of the present invention will be explained in detail below.

### (Embodiment 1)

In this embodiment, a case is described in which, in a multicarrier communication system using the OFDM (Orthogonal Frequency Division Multiplex) method, a paging channel is assigned as a common control channel to a smaller number of subcarriers than the number of traffic channel subcarriers, and paging is performed for grouped communication terminal apparatuses.

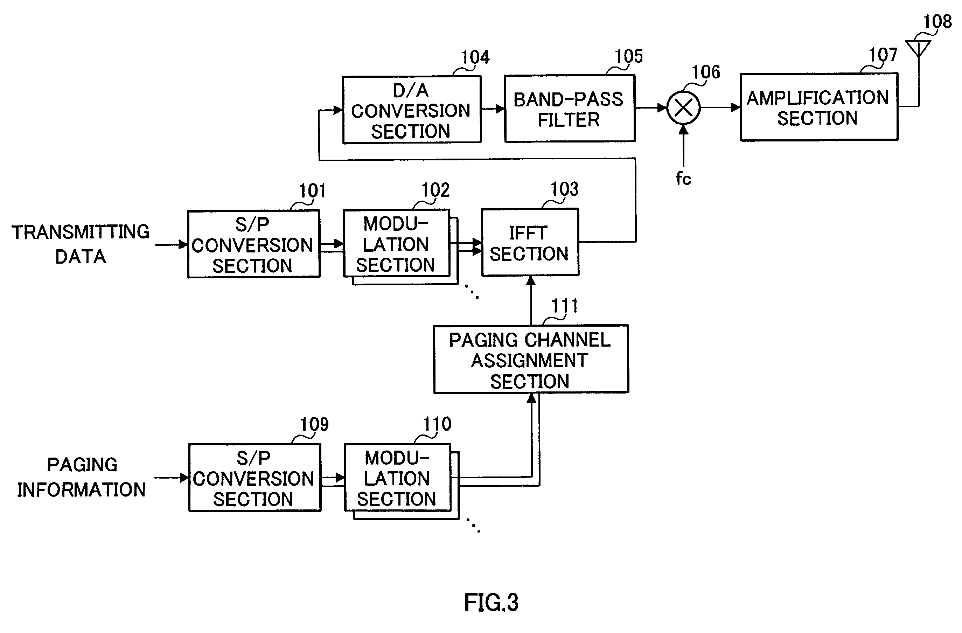

FIG.3 is a block diagram showing the configuration of a base station apparatus according to Embodiment 1 of the present invention. In the base station apparatus shown in FIG.3, transmitting data is converted to parallel signals by a serial/parallel (S/P) conversion section 101, and the parallel signals are output to modulation sections 102. Each modulation section 102 performs digital modulation processing on the input signal, and outputs the modulated signal to an IFFT (inverse fast Fourier transform) section 103.

On the other hand, paging information is converted to parallel signals by an S/P conversion section 109, and the parallel signals are output to modulation sections 110. Each modulation section 110 performs digital modulation processing on the input signal, and outputs the modulated signal to a paging channel information assignment section 111. The paging channel assignment section 111 performs control to assign paging information to a smaller number of subcarriers than the number of subcarriers to which transmitting data is assigned.

The IFFT section 103 performs IFFT processing on transmitting data and paging information that has undergone digital modulation according to assignment information from the paging channel assignment section 111, and outputs the signal resulting from this IFFT processing to a D/A conversion section 104. The D/A conversion section 104 converts the IFFT-processed signal to an analog signal and outputs it to a band-pass filter 105. The band-pass filter 105 filters the signal band from the analog signal.

A signal in this signal band is multiplied by a carrier signal whose frequency is center of entire multicarrier signal band (fc) in a multiplier 106, and this carrier is amplified by an amplification section 107. The amplified signal is transmitted to communication terminal apparatuses via an antenna 108.

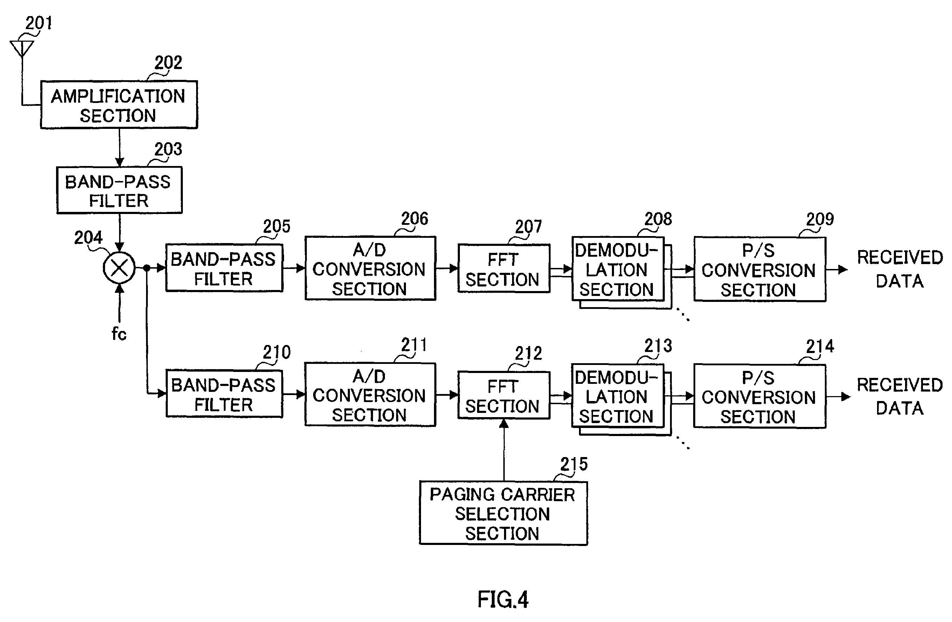

FIG.4 is a block diagram showing the configuration of a communication terminal apparatus that performs radio communication with a base station apparatus according to Embodiment 1 of the present invention. In the communication terminal apparatus shown in FIG.4, a signal transmitted from a base station apparatus is received via an antenna 201 and amplified by an amplification section 202, after which the signal band is filtered by a band-pass filter 203.

The signal in which only the signal band has been extracted is multiplied by a carrier signal whose frequency is center of entire multicarrier signal band (fc) in a multiplier 204, and the frequency band is converted. The band-converted signal is separated into a traffic channel and a paging channel.

As regards a traffic channel signal, the traffic channel band is filtered by a traffic channel (comparatively wideband) band-pass filter 205, and undergoes A/D conversion by a high-speed A/D conversion section 206. The digital signal undergoes FFT processing by a traffic channel wideband FFT section 207, and each signal corresponding to a subcarrier is output to a demodulation section 208. The subcarrier signals are demodulated by the respective demodulation sections 208, and outputted to a parallel/serial (P/S) conversion section 209. The demodulated data is converted to a serial signal by the P/S conversion section 209, and outputted as time-series data.

Similarly, as regards a paging channel signal, the band for a paging channel is filtered by a paging channel narrow-band-pass filter 210, and undergoes A/D conversion by a high-speed A/D conversion section 211. The digital signal undergoes FFT processing by a paging channel narrow-band FFT section 212, and each signal corresponding to a subcarrier is outputted to a demodulation section 213. The subcarrier signals are demodulated by the respective demodulation sections 213, and outputted to a parallel/serial (P/S) conversion section 214. The demodulated data is converted to a serial signal by the P/S conversion section 214, and outputted as time-series data.

The case will now be described where a paging channel and a traffic channel that is wide band are transmitted and received by a base station apparatus and communication terminal apparatus which are multicarrier communication apparatuses that have the above-described configurations.

In the base station apparatus shown in FIG.3, the digitally-modulated signal derived from transmitting data on a traffic channel and paging information on a paging channel undergo IFFT processing, and are transmitted to communication terminal apparatuses as a multicarrier signal.

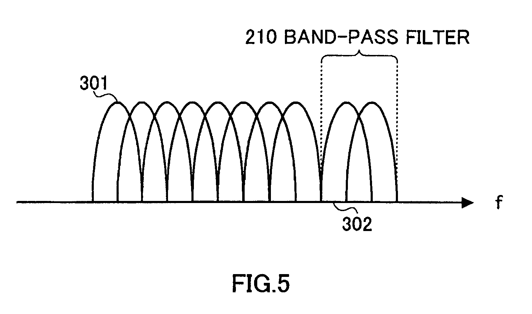

In this case, since the volume of transmitting data transmitted is large, the traffic channel is made wide band, but since the volume of paging information transmitted is small, it is not necessary to make the paging channel wide band. Therefore, in this embodiment, the paging channel assignment section 111 on the base station apparatus side groups a plurality of communication terminal apparatuses which are objects of paging, and assigns a paging channel subcarrier to each group. That is to say, the paging channel is assigned to subcarriers as shown in FIG.5.

An example of a method of grouping a plurality of communication terminal apparatuses is to estimate the direction of arrival of signals from each communication terminal apparatus, and group those for which the direction of arrival is within a predetermined angular range.

FIG.5 is an illustration showing traffic channel and paging channel assignment to subcarriers. In FIG.5, reference numeral 301 denotes one subcarrier, and reference numeral 302 denotes paging channel subcarriers assigned to a group to which communication terminal apparatuses belong. Here, a communication terminal apparatus group corresponds to a subcarrier group (in FIG.5, two subcarriers). Assignment information on subcarriers assigned in this way (information as to which communication terminal group is assigned to which subcarriers) is reported to each communication terminal apparatus.

A communication terminal apparatus separates traffic channel signals and paging channel signals, and for paging channel signals, receives, and identifies paging information in, only the subcarrier group corresponding to the group to which that communication terminal apparatus itself belongs. In this case, the frequencies of the subcarriers corresponding to the group to which a communication terminal apparatus itself belongs are reported by the base station apparatus, and therefore each communication terminal apparatus can receive, and obtain paging information from, only the subcarrier group corresponding to the group to which that communication terminal apparatus itself belongs.

Through the use of a multicarrier communication apparatus of this embodiment, even if a user's traffic channel is assigned to a wide band by means of a plurality of subcarriers, a small number of subcarriers are assigned to a paging channel constituting a downlink common control channel. Consequently, even if a traffic channel is large-volume, control information such as paging information does not increase, and it is possible to prevent a common control channel that transmits control information from becoming large-volume.

Therefore, in a multicarrier communication method, transmission is performed on a large-volume traffic channel using a plurality of subcarriers, and transmission is performed on a paging channel using fewer subcarriers than for a traffic channel. Consequently, in paging channel reception, it is possible not to perform demodulation using FFT processing across a wide band, but to use FFT processing only in a narrow band in which a paging channel is included.

As a result, a slow sampling rate can be used for the paging channel, and the amount of signal processing and power consumption can be reduced. By this means, it is possible to receive the paging channel at low speed and in a narrow band when a communication terminal is on standby, and to reduce communication terminal reception processing, and so save battery power. Moreover, since a plurality of subcarriers over the wideband are not occupied by a paging channel alone, spectrum efficiency can also be improved.

Moreover, in the present invention, it is also possible for reception processing for a traffic channel and paging channel to be carried out by the same processing system, with, for example, traffic channel and paging channel reception processing performed by means of time division, and the processing band of a band-pass filter being updated as appropriate according to the channel. Furthermore, in the present invention, it is also possible to use the same subcarrier group for a traffic channel and paging channel, and change the number of subcarriers to be used (using fewer for a paging channel than for a traffic channel).

### (Embodiment 2)

In this embodiment, a case is described in which, in a multicarrier communication system using the OFDM method, a paging channel is assigned to a specific subcarrier as a common control channel, and paging is performed for grouped communication terminal apparatuses.

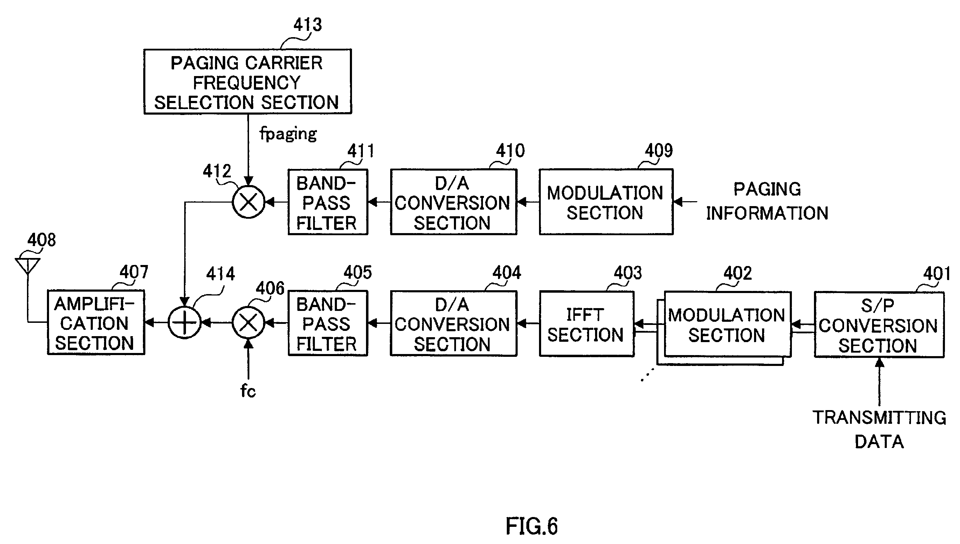

FIG.6 is a block diagram showing the configuration of a base station apparatus according to Embodiment 2 of the present invention. In the base station apparatus shown in FIG.6, transmitting data is converted to parallel signals by an S/P conversion section 401, and the parallel signals are outputted to modulation sections 402. Each modulation section 402 performs digital modulation processing on the input signal, and outputs the modulated signal to an IFFT section 403.

The IFFT section 403 performs IFFT processing on transmitting data that has undergone digital modulation, and outputs the signal resulting from this IFFT processing to a D/A conversion section 404. The D/A conversion section 404 converts the IFFT-processed signal to an analog signal and outputs it to a band-pass filter 405. The band-pass filter 405 filters the signal band from the analog signal. A signal in this signal band is multiplied by a carrier signal whose frequency is center of entire multicarrier signal band (fc) in a multiplier 406.

On the other hand, paging information undergoes digital modulation processing by a modulation section 409, and a modulated signal is outputted to a D/A conveysion section 410. The D/A conversion section 410 converts the digitally modulated signal to an analog signal, and outputs it to a band-pass filter 411. The band-pass filter 411 filters the signal band from the analog signal. A signal in this signal band is multiplied by a carrier signal whose frequency is paging carrier frequency (fpaging) in a multiplier 412. This paging carrier frequency is selected by a paging carrier frequency selection section 413. There are no particular restrictions on the method of selecting the paging carrier frequency.

Transmitting data and paging information multiplied by the carrier signal are multiplexed by an adder 414, and then these multiplex signals are amplified by an amplification section 407. The amplified signals are transmitted to communication terminal apparatuses via an antenna 408.

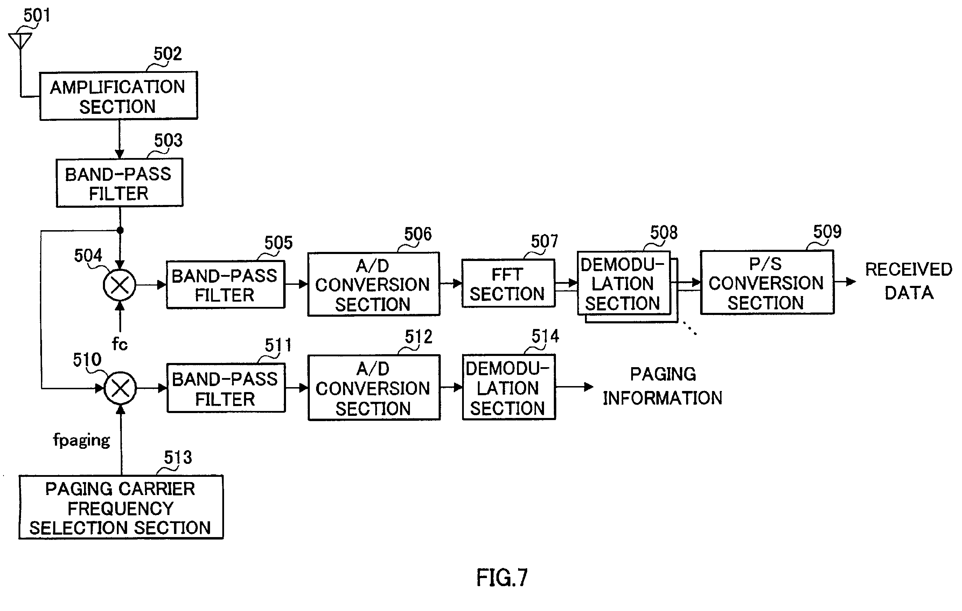

FIG.7 is a block diagram showing the configuration of a communication terminal apparatus according to Embodiment 2 of the present invention. In the communication terminal apparatus shown in FIG.7, a signal transmitted from a base station apparatus is received via an antenna 501 and amplified by an amplification section 502, after which the signal band is filtered by a band-pass filter 503.

The signal in which only the signal band has been extracted is multiplied by a carrier signal whose frequency is center of entire multicarrier signal band (fc) in a multiplier 504, and band-converted. Also, the signal in which only the signal band has been extracted is multiplied by a carrier signal whose frequency is paging carrier frequency (fpaging) in a multiplier 510, and band-converted. This paging carrier frequency is selected by a paging carrier frequency selection section 513. In this way, separation into a traffic channel and a paging channel is achieved.

As regards a traffic channel signal, the traffic channel band is filtered by a traffic channel band-pass filter 505, and undergoes A/D conversion by a high-speed A/D conversion section 506. The digital signal undergoes FFT processing by a traffic channel wideband FFT section 507, and each signal corresponding to a subcarrier is outputted to a demodulation section 508. The subcarrier signals are demodulated by the respective demodulation sections 508, and outputted to a P/S conversion section 509. The demodulated data is converted to a serial signal by the P/S conversion section 509, and outputted as time-series data.

Similarly, as regards a paging channel signal, the paging channel band is filtered by a paging channel narrow-band-pass filter 511, and undergoes A/D conversion by a high-speed A/D conversion section 512. The digital signal is demodulated by a demodulation section 514, and outputted as paging information.

The case will now be described where a paging channel and a traffic channel that is wide band are transmitted and received by a base station apparatus and communication terminal apparatus which are multicarrier communication apparatuses that have the above-described configurations.

In the base station apparatus shown in FIG.6, a digitally-modulated signal of transmitting data on a traffic channel undergoes IFFT processing, a digitally-modulated signal of paging information on a paging channel is assigned to a single subcarrier, and these are transmitted to communication terminal apparatuses as a multicarrier signal.

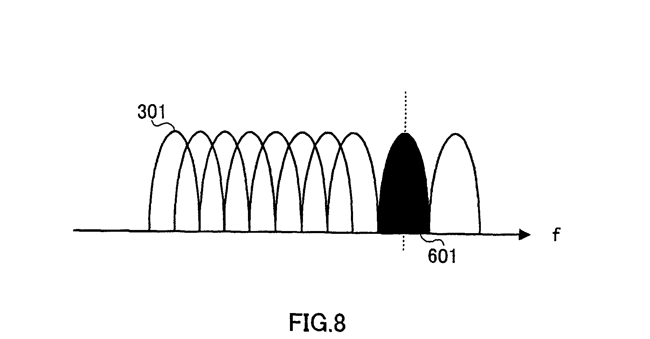

In this case, since the volume of transmitting data transmitted is large, the traffic channel is made wide band, but since the volume of paging information transmitted is small, it is not necessary to make the paging channel wide band. Therefore, in this embodiment, the paging channel frequency selection section 513 on the base station apparatus side groups a plurality of communication terminal apparatuses which are objects of paging, and selects a paging channel subcarrier for each group. That is to say, paging channel subcarrier selection is carried out as shown in FIG.8.

An example of a method of grouping a plurality of communication terminal apparatuses is to estimate the direction of arrival of signals from each communication terminal apparatus, and group those for which the direction of arrival is within a predetermined angular range.

FIG.8 is an illustration showing traffic channel and paging channel assignment to subcarriers. In FIG.8, reference numeral 301 denotes one subcarrier, and reference numeral 601 denotes a paging channel subcarrier assigned to a group to which communication terminal apparatuses belong. Here, a communication terminal apparatus group corresponds to a subcarrier or subcarriers (in FIG.8, one subcarrier). Selection information on a subcarrier selected in this way (information as to which subcarrier has been selected for which communication terminal group) is reported to each communication terminal apparatus.

A communication terminal apparatus separates traffic channel signals and paging channel signals, and for paging channel signals, receives, and identifies paging information in, only the subcarrier group corresponding to the group to which that communication terminal apparatus itself belongs. In this case, the frequency of a subcarrier corresponding to the group to which a communication terminal apparatus itself belongs is reported by the base station apparatus, and therefore each communication terminal apparatus can receive, and obtain paging information from, only the subcarrier corresponding to the group to which that communication terminal apparatus itself belongs. In this case, the subcarrier signal component can be extracted by multiplying a received signal by a paging carrier (subcarrier) to find a correlation.

Through the use of a base station apparatus of this embodiment, even if a user's traffic channel is assigned to a wide band by means of a plurality of subcarriers, a small number of subcarriers (here, one subcarrier) is selected for a paging channel constituting a downlink common control channel. Consequently, even if a traffic channel is large-volume, control information such as paging information does not increase, and it is possible to prevent a common control channel that transmits control information from becoming large-volume.

Therefore, in a multicarrier communication method, transmission is performed on a large-volume traffic channel using a plurality of subcarriers, while fewer subcarriers are selected for the paging channel than for the traffic channel, and transmission is performed with both multiplexed. Consequently, a paging channel can be extracted by multiplication by the paging channel subcarrier frequency. As a result, there is no need to be performed FFT processing for the paging channel, and the amount of signal processing can be reduced.

By this means, it is possible to receive the paging channel at low speed and in a narrow band when a communication terminal is on standby, and to reduce communication terminal reception processing, and so save battery power. Moreover, since a plurality of subcarriers spanning a wide band are not occupied by a paging channel alone, spectrum efficiency can also be improved.

Moreover, by grouping users and selecting a subcarrier for the paging signal of each group-that is, by assigning the paging signal of each group to a subcarrier-it is sufficient for a communication terminal simply to monitor the paging channel assigned to the group to which that communication terminal itself belongs, and detect whether or not there is a message, without having to monitor all paging channels constantly. Therefore, it is sufficient for a communication terminal to receive only a subcarrier to which that communication terminal itself belongs, and demodulate the paging signal. As a result, it is possible to save battery power through efficient reception.

Furthermore, if a paging channel is assigned to each user group by time division, when a communication terminal is on normal standby, it is possible for a call reception at that communication terminal itself to be ascertained by means of intermittent paging channel reception, enabling battery power to be saved while standing by.

For a paging channel, an uplink channel for other use may be assigned to a subcarrier by time division rather than using dedicated assignment to a subcarrier. Also, a plurality of subcarriers may be used for a paging channel rather than using only a single subcarrier for a paging channel.

### (Embodiment 3)

In this embodiment, a case is described in which, in a multicode communication system using the CDMA (Code Division Multiple Access) method, a smaller number of spreading codes than the number of traffic channel spreading codes are assigned to a paging channel as a common control channel, and paging is performed for grouped communication terminal apparatuses.

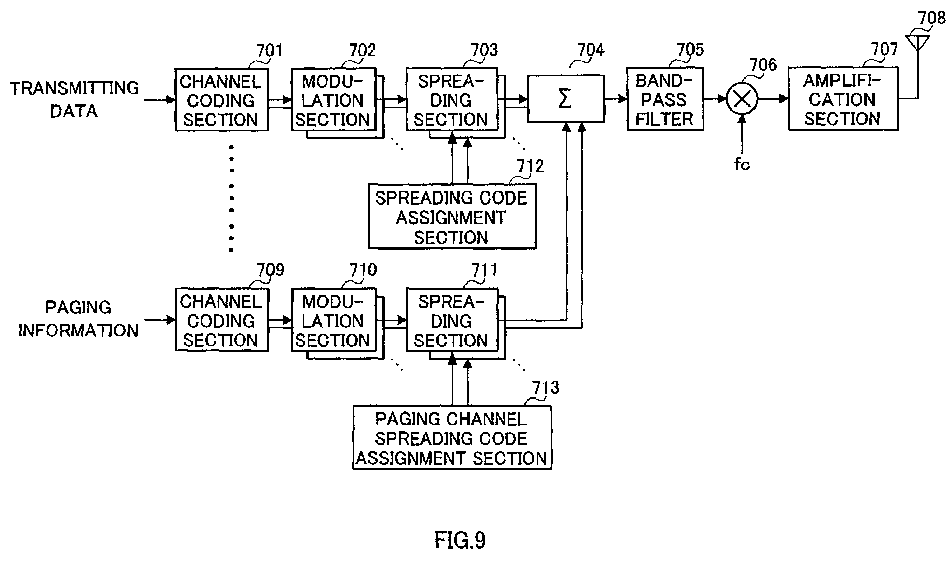

FIG.9 is a block diagram showing the configuration of a base station apparatus according to Embodiment 3 of the present invention. In the base station apparatus shown in FIG.9, transmitting data undergoes channel coding (error correction coding, interleaving, and assignment to spreading codes) for the respective channels by a channel coding section 701, and signals that have undergone channel coding are outputted to modulation sections 702. Each modulation section 702 performs digital modulation processing on the input signal, and outputs the modulated signal to a spreading section 703.

The spreading sections 703 perform spreading modulation processing on signals that have undergone modulation processing, using a spreading code assigned by a spreading code assignment section 712. A spreading code assigned by the spreading code assignment section 712 is outputted from the spreading code assignment section 712 to the spreading section 703 that processes the signal to which that spreading code has been assigned.

On the other hand, paging information undergoes channel coding (error correction coding, interleaving, and assignment to spreading codes) by a channel coding section 709, and signals that have undergone channel coding are outputted to modulation sections 710. Each modulation section 710 performs digital modulation processing on the input signal, and outputs the modulated signal to a spreading section 711. Signals that have undergone spreading modulation processing are outputted to a multiplexing section 704.

The spreading sections 711 perform spreading modulation processing on signals that have undergone modulation processing, using a spreading code assigned by a paging channel spreading code assignment section 713. A spreading code assigned by the paging channel spreading code assignment section 713 is outputted from the paging channel spreading code assignment section 713 to the spreading section 711 that processes the signal to which that spreading code has been assigned. The paging channel spreading code assignment section 713 performs control for assigning a smaller number of spreading codes to paging information than the number of spreading codes assigned to transmitting data. Signals that have undergone spreading modulation processing are outputted to the multiplexing section 704.

The multiplexing section 704 multiplexes signals that have undergone spreading modulation processing from spreading sections 703 (transmitting data) and signals that have undergone spreading modulation processing from spreading sections 711 (paging information), and outputs the resulting signal to a band-pass filter 705. The band-pass filter 705 filters the signal band from the multiplexed signal.

A signal in this signal band is multiplied by a carrier signal whose frequency is center of entire multicarrier signal band (fc) in a multiplier 706, and this carrier is amplified by an amplification section 707. The amplified signal is transmitted to communication terminal apparatuses via an antenna 708.

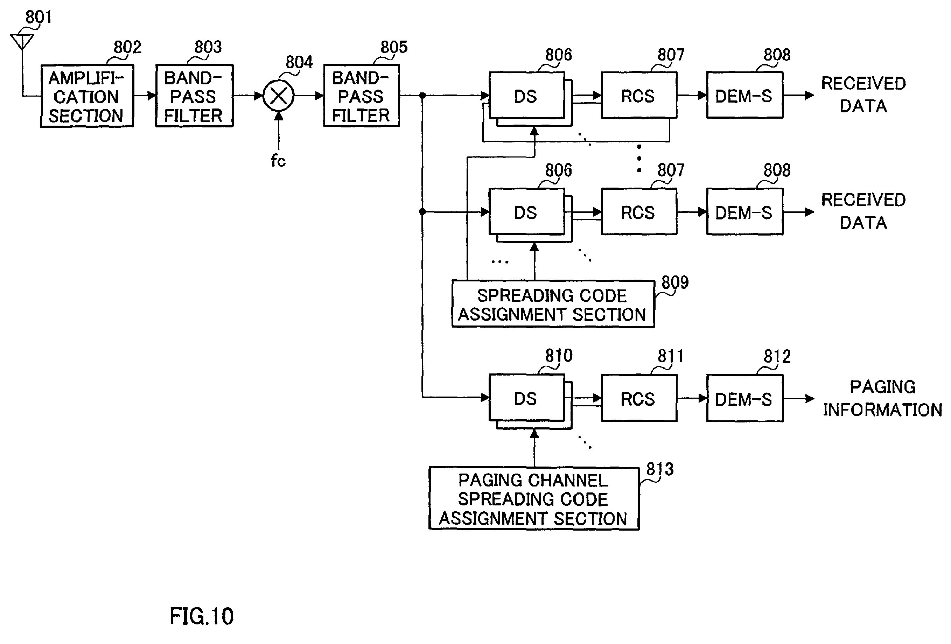

FIG.10 is a block diagram showing the configuration of a communication terminal apparatus according to Embodiment 3 of the present invention. In the communication terminal apparatus shown in FIG.10, a signal transmitted from a base station apparatus is received via an antenna 801 and amplified by an amplification section 802, after which the signal band is filtered by a band-pass filter 803.

The signal in which only the signal band has been extracted is multiplied by a carrier signal whose frequency is center of entire multicarrier signal band (fc) in a multiplier 804, and band-converted. The band-converted signal is outputted to a traffic channel despreading section (DS) 806 and a paging channel despreading section (DS) 810.

As regards a traffic channel signal, separation is performed by traffic channel despreading sections (DS) 806 by performing despreading processing using a traffic channel despreading code assigned by the base station apparatus. Traffic channel spreading codes are outputted from a spreading code assignment section 809 to respective despreading sections (DS) 806.

Signals that have undergone despreading processing are outputted to a RAKE combining section (RCS) 807 where they undergo RAKE combining, and a RAKE-combining-processed signal is outputted to a demodulation section (DEM-S) 808. The RAKE-combining-processed signal is demodulated by the demodulation section (DEM-S) 808 and outputted as received data.

Similarly, as regards a paging channel signal, separation is performed by paging channel despreading sections (DS) 810 by performing despreading processing using a paging channel despreading code assigned by the base station apparatus. Paging channel spreading codes are outputted from a paging channel spreading code assignment section 813 to respective despreading sections (DS) 810.

Signals that have undergone despreading processing are outputted to a RAKE combining section (RCS) 811 where they undergo RAKE combining, and a RAKE-combining-processed signal is output to a demodulation section (DEM-S) 812. The RAKE-combining-processed signal is demodulated by the demodulation section (DEM-S) 812 and outputted as paging information.

The case will now be described where a paging channel and a traffic channel that is wide band are transmitted and received by a base station apparatus and communication terminal apparatus which are multicode communication apparatuses that have the above-described configurations.

In the base station apparatus shown in FIG.9, spread signals of transmitting data on traffic channel and spread signals of paging information on paging channel are multiplexed, and are transmitted to communication terminal apparatuses as a multicode signal.

In this case, since the volume of transmit data transmitted is large, a plurality of spreading codes are used for the traffic channel, but since the volume of paging information transmitted is small, a small number of spreading codes are used for the paging channel. Therefore, in this embodiment, the paging channel spreading code assignment section 713 on the base station apparatus side groups a plurality of communication terminal apparatuses which are objects of paging, and assigns a spreading code to the paging channel for each group.

An example of a method of grouping a plurality of communication terminal apparatuses is to estimate the direction of arrival of signals from each communication terminal apparatus, and group those for which the direction of arrival is within a predetermined angular range.

Assignment information on spreading codes assigned in this way (information as to which spreading code is assigned to which communication terminal group) is reported to each communication terminal apparatus.

A communication terminal apparatus separates traffic channel signals and paging channel signals by means of despreading processing, and for paging channel signals, performs despreading processing on, and identifies paging information in, only the spreading code corresponding to the group to which that communication terminal apparatus itself belongs. In this case, the spreading code corresponding to the group to which a communication terminal apparatus itself belongs is reported by the base station apparatus, and therefore each communication terminal apparatus can obtain paging information by performing despreading processing using only the spreading code corresponding to the group to which that communication terminal apparatus itself belongs.

Through the use of a base station apparatus of this embodiment, even if a plurality of spreading codes are assigned to a user's traffic channel, a small number of spreading codes are assigned to a paging channel constituting a downlink common control channel. Consequently, even if a traffic channel is large-volume, control information such as paging information does not increase, and it is possible to prevent a common control channel that transmits control information from becoming large-volume.

Therefore, in a multicode communication method, transmission is performed on a large-volume traffic channel by performing spreading modulation using a plurality of spreading codes, and transmission is performed on a paging channel by performing spreading modulation processing using a smaller number of spreading codes than for the traffic channel. Consequently, in paging channel reception, it is possible not to perform despreading processing using a large number of spreading codes, but to perform despreading processing using a small number of spreading codes used for a paging channel.

As a result, the amount of despreading processing can be reduced for a paging channel. Also, since spreading codes are used efficiently, it is possible to make efficient use of code resources.

Moreover, in this embodiment, a similar effect to that described above can still be obtained if spreading codes with a small spreading ratio are assigned to a traffic channel and spreading codes with a spreading ratio larger than that of the aforementioned plurality of spreading codes are assigned to a control channel.

Furthermore, in a digital radio communication system that uses both a multicarrier communication method and a multicode communication method, greater radio resources determined by a combination of number of subcarriers, number of spreading codes, and spreading ratio, are assigned to a traffic channel, and fewer radio resources than the plurality of spreading codes are assigned to a control channel. Consequently, with regard to a multicarrier communication method, a small number of carriers are assigned to a control channel used for control with a small amount of information, or short message transmission or control, and it is not necessary to transmit a wide band as well as for a traffic channel, enabling spectrum efficiency to be improved; and with regard to a multicode communication method, even if a traffic channel is large-volume, control information such as paging information does not increase, and it is possible to prevent a common control channel that transmits control information from becoming large-volume.

The present invention is not limited to the OFDM method, and can also be applied to other multicarrier communication methods, and similar effects can still be obtained if the present invention is applied to another multicarrier communication method.

In above Embodiments 1 through 3, a case has been described where a common control channel is a paging channel, but the present invention can also be applied to a case where a common control channel is another downlink common control channel.

A base station apparatus of the present invention has a configuration comprising an assignment section that assigns a plurality of subcarriers to a traffic channel and assigns subcarriers of which number is smaller than that of the aforementioned plurality of subcarriers to a control channel, and a transmitting section that transmits a multicarrier signal including subcarriers assigned by the aforementioned assignment section to a communication terminal apparatus.

According to this configuration, since a small number of carriers are assigned to a control channel used for control or short message transmission or control, it is not necessary to transmit a wide band as well as for a traffic channel, enabling spectrum efficiency to be improved.

A base station apparatus of the present invention has a configuration whereby, in the above-described configuration, the assignment section groups communication terminal apparatuses and assigns an aforementioned control channel to a subcarrier for each of those groups.

According to this configuration, since a control channel is assigned to each communication terminal apparatus (users) that is grouped, it is sufficient simply to modulate and transmit only the control channel assigned to the group to which the communication terminal apparatus to communicate with belongs, and it is not necessary to modulate and transmit a control channel assigned to other user groups, thus making it possible to improve spectrum efficiency.

A base station apparatus of the present invention has a configuration comprising an assignment section that assigns a plurality of spreading codes to a traffic channel and assigns spreading codes of which number is smaller than that of the aforementioned plurality of spreading codes to a control channel, and a transmitting section that transmits a multicode signal that has undergone spreading modulation processing using a spreading code assigned by the aforementioned assignment section to a communication terminal apparatus.

According to this configuration, even if a traffic channel is large-volume, control information such as paging information does not increase, and it is therefore possible to prevent a common control channel that transmits control information from becoming large-volume.

A base station apparatus of the present invention has a configuration whereby in the above-described configuration, the assignment section groups communication terminal apparatuses and assigns a spreading code to an aforementioned control channel for each of those groups.

According to this configuration, since a spreading code is assigned to each group of communication terminal apparatuses (users), it is sufficient to perform spreading modulation processing using only the spreading code assigned to the group to which the communication terminal apparatus to communicate with belongs, and it is not necessary to perform spreading modulation processing using a spreading code assigned to other user groups, enabling the amount of processing to be reduced and also making it possible to make efficient use of code resources.

A base station apparatus of the present invention has a configuration comprising an assignment section that assigns spreading codes with a small spreading ratio to a traffic channel and assigns spreading codes with a spreading ratio larger than that of the aforementioned spreading codes to a control channel, and a transmitting section that transmits a signal that has undergone spreading modulation processing using a spreading code assigned by the aforementioned assignment section to a communication terminal apparatus.

A base station apparatus of the present invention has a configuration comprising an assignment section that assigns great radio resources determined by a combination of number of subcarriers, number of spreading codes, and spreading ratio, to a traffic channel, and assigns fewer radio resources than the aforementioned radio resources to a control channel, and a transmitting section that transmits a signal that has undergone spreading processing using radio resources assigned by the aforementioned assignment section to a communication terminal apparatus.

According to these configurations, even if a traffic channel is large-volume, control information such as paging information does not increase, and it is therefore possible to prevent a common control channel that transmits control information from becoming large-volume.

A communication terminal apparatus of the present invention is characterized by performing radio communication with a base station apparatus having an above-described configuration. As a result, in a multicarrier communication method, it is not necessary to receive a plurality of subcarriers, processing involved in reception is reduced, and power consumption is reduced, thus enabling battery power to be saved. Therefore, it is possible to achieve low power consumption in standby mode in which. intermittent paging channel reception is performed, and to prolong the standby time of a communication terminal apparatus. Also, in a multicode communication method, since a spreading code is assigned to each group of communication terminal apparatuses (users), it is sufficient to perform despreading processing using only the spreading code assigned to the group to which the communication terminal apparatus to communicate with belongs, and it is not necessary to perform despreading processing using a spreading code assigned to other user groups, with the result that the amount of processing is reduced.

A communication terminal apparatus of the present invention is characterized by receiving, during standby, a control channel signal assigned to a subcarrier corresponding to the group to which that communication terminal apparatus itself belongs, and transmitted from an above-described base station apparatus. Thus, by assigning a control channel subcarrier to each group, it is not necessary for a communication terminal apparatus itself to receive a plurality of subcarriers, processing involved in reception is reduced, and power consumption is reduced, thus enabling battery power to be saved. Therefore, it is possible to achieve low power consumption in standby mode in which intermittent paging channel reception is performed, and to prolong the standby time of a communication terminal apparatus.

A communication terminal apparatus of the present invention is characterized by receiving, during standby, a control channel signal that has undergone spreading modulation processing using the spreading code corresponding to the group to which that communication terminal apparatus itself belongs, and transmitted from an above-described base station apparatus. Thus, since a spreading code is assigned to each communication terminal apparatus that is grouped, it is sufficient to perform despreading processing using only the spreading code assigned to the group to which the communication terminal apparatus itself belongs, and it is not necessary to perform despreading processing using a spreading code assigned to other user groups, with the result that the amount of processing is reduced.

A radio communication method of the present invention comprises an assigning step of assigning a plurality of subcarriers to a traffic channel and assigning subcarriers of which number is smaller than that of the aforementioned plurality of subcarriers to a control channel, a transmitting step of transmitting a multicarrier signal including subcarriers assigned in the aforementioned assigning step to a communication terminal apparatus, and a receiving step of receiving a control channel signal assigned to a subcarrier corresponding to the group to which the communication terminal apparatus itself belongs, included in the aforementioned multicarrier signal, when the aforementioned communication terminal apparatus is on standby.

According to this method, since a small number of carriers are assigned to a control channel used for control or short message transmission or control, it is not necessary to transmit a wide band as well as for a traffic channel, enabling spectrum efficiency to be improved.

A radio communication method of the present invention comprises an assigning step of assigning a plurality of spreading codes to a traffic channel and assigning spreading codes of which number is smaller than that of the aforementioned plurality of spreading codes to a control channel, a transmitting step of transmitting a multicode signal that has undergone spreading modulation processing using a spreading code assigned in the aforementioned assigning step to a communication terminal apparatus, and a receiving step of receiving a control channel signal that has undergone spreading modulation processing using a spread signal corresponding to the group to which the communication terminal apparatus itself belongs, included in the aforementioned multicode signal, when the aforementioned communication terminal apparatus is on standby.

According to this method, even if a traffic channel is large-volume, control information such as paging information does not increase, and it is therefore possible to prevent a common control channel that transmits control information from becoming large-volume.

According to the present invention, in a multicarrier communication system, spectrum efficiency can be improved by assigning a small number of subcarriers to a control channel such as a paging channel, in contrast to a large-volume traffic channel for which a plurality of subcarriers are assigned to a user.

Also, since a control channel is received at low speed and in a narrow band, the sampling rate in signal processing such as A/D conversion can be kept low, enabling the amount of signal processing to be reduced and power saving to be achieved.

Moreover, by grouping users and assigning a control channel subcarrier to each of these groups, it is not necessary for a communication terminal apparatus to receive a plurality of subcarriers, processing involved in reception is reduced, and power consumption is reduced, thus enabling battery power to be saved. Therefore, it is possible to achieve low power consumption in standby mode in which intermittent paging channel reception is performed, and to prolong the standby time of a communication terminal apparatus.

Furthermore, according to the present invention, in a multicode communication system, efficient use of code resources can be made by assigning a small number of spreading codes to a control channel such as a paging channel, in contrast to a large-volume traffic channel for which a plurality of spreading codes are assigned to a user.

Moreover, since a spreading code is assigned to each communication terminal apparatus (users) that is grouped, it is sufficient to perform despreading processing using only the spreading code assigned to the group to which the communication terminal apparatus to communicate with belongs, and it is not necessary to perform despreading processing using a spreading code assigned to other user groups, with the result that the amount of processing is reduced.

This application is based on Japanese Patent Application No. 2000-085915 filed on March 27, 2000, entire content of which is expressly incorporated by reference herein.

### Industrial Applicability

The present invention is applicable to a base station apparatus and radio communication method to be used in a multicarrier digital radio communication system.

## Claims

1. A base station apparatus comprising:
assigning means for assigning a plurality of subcarriers to a traffic channel and assigning subcarriers of which number is smaller than that of said plurality of subcarriers to a control channel; and
transmitting means for transmitting to a communication terminal apparatus a multicarrier signal including subcarriers assigned by said assigning means.

2. The base station apparatus according to claim 1, wherein said assigning means groups communication terminal apparatuses and assigns said control channel to a subcarrier for each of these groups.

3. A base station apparatus comprising:
assigning means for assigning a plurality of spreading codes to a traffic channel and assigning spreading codes of which number is smaller than that of said plurality of spreading codes to a control channel; and
transmitting means for transmitting to a communication terminal apparatus a multicode signal that has undergone spreading modulation processing using a spreading code assigned by said assigning means.

4. The base station apparatus according to claim 3, wherein said assigning means groups communication terminal apparatuses and assigns a spreading code to said control channel for each of these groups.

5. A base station apparatus comprising:
assigning means for assigning a spreading code with a small spreading ratio to a traffic channel and assigning a spreading code with a spreading ratio larger than that of said spreading code to a control channel; and
transmitting means for transmitting to a communication terminal apparatus a signal that has undergone spreading modulation processing using a spreading code assigned by said assigning means.

6. A base station apparatus comprising:
assigning means for assigning great radio resources determined by a combination of number of subcarriers, number of spreading codes, and spreading ratio, to a traffic channel, and assigning fewer radio resources than said radio resources to a control channel; and
transmitting means for transmitting to a communication terminal apparatus a signal that has undergone modulation processing using radio resources assigned by said assigning means.

7. A communication terminal apparatus that performs radio communication with a base station apparatus, said base station apparatus comprising:
assigning means for assigning a plurality of subcarriers to a traffic channel and assigning subcarriers of which number is smaller than that of said plurality of subcarriers to a control channel; and
transmitting means for transmitting to a communication terminal apparatus a multicarrier signal including subcarriers assigned by said assigning means.

8. A communication terminal apparatus that, during standby, receives a control channel signal assigned to a subcarrier corresponding to the group to which that communication terminal apparatus itself belongs, and transmitted from a base station apparatus, said base station apparatus comprising:
assigning means for assigning a plurality of subcarriers to a traffic channel and assigning subcarriers of which number is smaller than that of said plurality of subcarriers to a control channel; and
transmitting means for transmitting to a communication terminal apparatus a multicarrier signal including subcarriers assigned by said assigning means.

9. A communication terminal apparatus that, during standby, receives a control channel signal that has undergone spreading modulation processing using a spreading code corresponding to the group to which that communication terminal apparatus itself belongs, and transmitted from a base station apparatus, said base station apparatus comprising:
assigning means for assigning a plurality of spreading codes to a traffic channel and assigning spreading codes of which number is smaller than that of said plurality of spreading codes to a control channel; and
transmitting means for transmitting to a communication terminal apparatus a multicode signal that has undergone spreading modulation processing using a spreading code assigned by said assigning means.

10. A radio communication method comprising:
an assigning step for assigning a plurality of subcarriers to a traffic channel and assigning subcarriers of which number is smaller than that of said plurality of subcarriers to a control channel:
a transmitting step for transmitting to a communication terminal apparatus a multicarrier signal including subcarriers assigned in said assigning step; and
a receiving step for receiving a control channel signal assigned to a subcarrier corresponding to the group to which said communication terminal apparatus itself belongs, included in said multicarrier signal, when said communication terminal apparatus is on standby.

11. A radio communication method comprising:
an assigning step for assigning a plurality of spreading codes to a traffic channel and assigning spreading codes of which number is smaller than that of said plurality of spreading codes to a control channel;
a transmitting step for transmitting to a communication terminal apparatus a multicode signal that has undergone spreading modulation processing using a spreading code assigned in said assigning step; and
a receiving step for receiving a control channel signal that has undergone spreading modulation processing using a spread signal corresponding to the group to which said communication terminal apparatus itself belongs, included in said multicode signal, when said communication terminal apparatus is during standby.
